Europäisches Patentamt

European Patent Office

Office européen des brevets

(11) Veröffentlichungsnummer: **0 247 210**
**A1**

## (12) EUROPÄISCHE PATENTANMELDUNG

(21) Anmeldenummer: **86106857.5**

(22) Anmeldetag: **20.05.86**

(51) Int. Cl.4: **B23Q 27/00**

(43) Veröffentlichungstag der Anmeldung:
**02.12.87 Patentblatt 87/49**

(84) Benannte Vertragsstaaten:
**AT CH DE FR GB IT LI SE**

(71) Anmelder: **Rheinische Maschinenfabrik & Eisengiesserei, Anton Röper GmbH & Co. Kommanditgesellschaft**
**Brabanter Strasse 56**
**D-4060 Viersen 11-Dülken(DE)**

(72) Erfinder: **Klemme, Horst**
**Lukasstrasse 3**
**D-4060 Viersen 11(DE)**
Erfinder: **Hauptmanni, Oswald, Dipl.-Ing.**
**Haselnussweg 2**
**D-4060 Viersen 11(DE)**

(74) Vertreter: **Walter, Helmut**
**Aubingerstrasse 81**
**D-8000 München 60(DE)**

(54) **Vorrichtung zum Erzeugen der Mantelfläche von Werkstücken.**

(57) Vorrichtung zum Erzeugen der Mantelfläche von Werkstücken (1), deren Querschnitt ein vom Zylinder abweichender Rotationskörper, zum Beispiel Ellipse oder schräger Zylinderschnitt oder dergleichen ist, wobei die Vorschubachse (7) des Werkstückes (1) relativ zum Werkzeug (3, 12) in einem Winkel ($\alpha$) zur Rotationsachse (X) geneigt ist.

FIG.1

Xerox Copy Centre

## Vorrichtung zum Erzeugen der Mantelfläche von Werkstücken

Die Erfindung bezieht sich auf eine Vorrichtung, wie sie im Oberbegriff des Hauptanspruches beschrieben ist.

Es sind Drehmaschinen bekannt, bei denen das Werkstück relativ zum Werkzeug in Drehung versetzt und dabei mit einem Vorschub in Richtung der Rotationsachse (Drehachse) verschoben wird. Damit werden Werkstücke mit zylindrischem Querschnitt erzeugt.

Es sind auch Drehmaschinen bekannt, auf denen Werkstücke erzeugt werden können, deren Querschnitt von der Zylinderform abweichen, z.B. elliptisch oder dergleichen, geformt sind. Bei diesen Maschinen werden die Werkstücke ebenfalls in Rotation versetzt und mit einem Vorschub in Richtung der Rotationsachse am Werkzeug oder an mehreren Werkzeugen vorbeigeführt. Der vom Zylinder abweichende Querschnitt (Unrundheit) wird dabei mit einer Vorrichtung erzeugt, bei der das Werkzeug oder die Werkzeuge rechtwinklig zur Rotationsachse verschieblich angeordnet sind und von einer Steuerkurve oder dergleichen entsprechend der gewünschten Querschnittsform gesteuert werden. Derartige Kopiervorrichtungen sind aufwendig.

Der Erfindung liegt eine Vorrichtung zum Erzeugen von Werkstücken mit von der zylindrischen Form abweichendem Querschnitt zugrunde, die einfacher ist und insbesondere einfacher und - schneller umgerüstet werden kann.

Die der Erfindung zugrundeliegende Aufgabe wird mit einer Vorrichtung gelöst, die die Merkmale des Anspruches 1 aufweist.

Die Erfindung kann gemäß Anspruch 20 so gestaltet sein, daß die Vorrichtung einer Werkzeugmaschine entspricht oder auf ihr verwendet wird, bei der das Werkstück relativ zum Werkzeug oder zu den Werkzeugen während der Spanabnahme rotiert. Hierfür kann im Prinzip jedes spanabhebende Werkzeug verwendet werden, zum Beispiel Drehstahl, Schleifscheiben oder ein anderes Werkzeug.

Nach einer anderen Ausgestaltung der Erfindung kann die Vorrichtung gemäß Anspruch 3 entsprechend einer Räumvorrichtung oder dergleichen gestaltet sein. Voraussetzung für diese Ausführungsform ist, daß das Material beim Räumen nicht reißt.

Während nach Anspruch 2 die Rotationsachse die Achse ist, um die das Werkstück oder das Werkzeug oder die Werkzeugkombination rotiert, ist in der Ausführungsform nach Anspruch 3 die Rotationsachse die Achse des einen Rotationskörpers darstellenden Werkzeuges also zum Beispiel des Räumringes.

Nach Anspruch 1 ist die Richtung des Vorschubs (Vorschubachse) relativ zur Rotationsachse einstellbar, wozu sich ein den Spindelstock (Träger des Futters) tragender Schlitten oder dergleichen anbietet, der auf einer schwenkbar Führung gelagert ist. Nach Anspruch 4 kann aber auch die Vorschubachse in zwei Komponenten aufgeteilt sein, so daß eine Art Kreuzschlitten verwendbar ist bei dem jede Koordinate gesondert numerisch gesteuert werden kann. Der maschinenbauliche Teil der Vorrichtung wird dadurch einfacher.

Mit der Vorrichtung nach der Erfindung können Werkstücke auf einfache und sehr genaue Weise erzeugt werden, deren Querschnitt einen schrägen Zylinderschnitt darstellen. Eine derartige Querschnittsform ist zum Beispiel für Kolben von Verbrennungs-Kraftmaschinen vorteilhaft

Weitere Vorteile und Merkmale der Erfindung können der nachstehenden Beschreibung entnommen werden

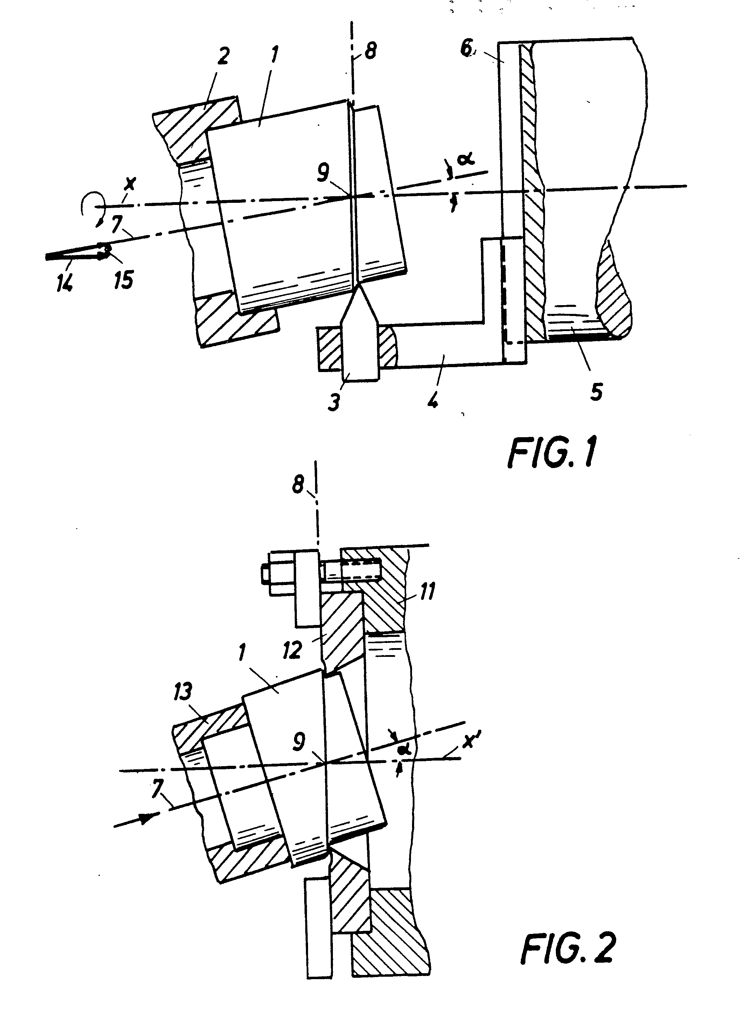

Die Erfindung ist anhand der Figuren 1 und 2 erläutert.

Fig.1 zeigt schematisch eine bevorzugte Ausführungsform der Erfindung; die Erfindung ist im Zusammenhang mit einer dieser Ausführungsform zugrundeliegenden Maschine entstanden und diese Anwendung hierfür bevorzugt vorgesehen;

Fig.2 zeigt einen weiteren Anwendungsfall für das Prinzip der Erfindung.

Fig.1 zeigt die für die Erfindung wesentlichen Teile einer Drehmaschine. Das Werkstück 1 ist in einem Futter 2 eingespannt. Ein oder mehrere Drehwerkzeuge 3 sind mittels ein oder mehrerer Werkzeughalter 4 in einem Werkzeugträger 5 so eingespannt, daß sie radial zu einer Rotationsachse X der Drehmaschine, d.h. also radial zur Spindel der Maschine, eingestellt oder verstellt werden können. Im folgenden wird vom Werkzeug nur noch in der Einzahl gesprochen werden. Zum Ein- oder Verstellen des oder der Werkzeughalter kann eine Führung 6 mit den üblichen Halte-und Verstellvorrichtungen vorgesehen sein.

Das Werkstück kann relativ zum Werkzeug um die Rotationsachse X in Drehung versetzt werden, indem entweder das Futter 2 oder das Werkzeug um die Rotationsachse X drehend angetrieben wird. Während dieser Rotation kann das Werkstück 1 in Richtung der Achse (Vorschubachse) 7 verschoben werden und zwar so, daß sich die Achsen X und 7 in der Wirkungsebene 8 des Werkzeuges 3 in einem Schnittpunkt 9 schneiden. Der von den Achsen X und 7 gebildete Winkel $\alpha$ kann eingestellt werden. Dadurch daß sich die Achsen X, 7 und die Wirkungsebene 8 in dem Schnittpunkt 9 -

schneiden, ist die Achse 7 in diesem Punkt auch die Rotationsachse des Werkstückes 1. Daraus ergibt sich, daß der rechtwinklig zur Achse 7 liegende Querschnitt des Werkstückes einen - schrägen Zylinderschnitt entsprechend einer Ellipse oder dergleichen bildet. Die Darstellung ist auf die für die Erfindung wesentlichen Teile beschränkt. Befestigungs-, Einstell-, Führungs-und Antriebs mittel sind, da im Prinzip bekannt, nicht gezeichnet.

Nach einer anderen Ausführungsform der Erfindung kann die Achse 7 oder die entsprechende Vorschubrichtung in zwei rechtwinklig aufeinander stehenden Komponenten 14 und 15 aufgeteilt werden. Dann kann der Vorschub in Richtung der Achse 7 mit einer numerischen Steuerung angetrieben und gesteuert werden mittels Führungen für den Werkstückträger (Futter 2) oder den Werkzeugträger 5. Diese Führungen sind auf dem Maschinengestell fest angeordnet, d.h. die Einstellvorrichtung für den Winkel α kann dann entfallen

Fig.2 zeigt als weiteres Ausführungsbeispiel eine Räumvorrichtung nach der Erfindung. In einen Werkzeughalter 11 ist ein ringförmiges Räumwerkzeug 12 eingespannt. Die Achse dieses, einen Rotationskörper bildenden Werkzeugs ist mit X bezeichnet. Die Spanfläche des Räumwerkzeugs bildet die Wirkungsebene 8. Das Werkstück 1 ist in einem Futter 13 oder dergleichen eingespannt, mit dessen Hilfe das Werkstück durch das Räumwerkzeug gedrückt wird in Richtung der Achse 7, die zur Achse X′ des Rotationskörpers in dem wählbaren Winkel α geneigt ist. Die Wirkungsebene 8 und die Achsen X′ und 7 schneiden sich im Schnittpunkt 9. Die Achse 7 oder die entsprechende Richtung kann in die besagten Vorschubkomponenten 14 und 15 aufgeteilt sein, in denen der Vorschub numerisch gesteuert werden kann.

Die Erfindung ist nicht auf die gezeigten Ausführungsbeispiele beschränkt, sondern kann auf jedes beliebige Bearbeitungsverfahren, z.B. auch auf Schleifmaschinen angewendet werden.

## Ansprüche

1. Vorrichtung zum Erzeugen der Mantelfläche von Werkstücken, deren Querschnitt ein vom Zylinder abweichender Rotationskörper, z.B. Ellipse oder dergleichen ist, mit einem Vorschub der Werkstückes relativ zum Werkzeug in Richtung der Werkstücklängsachse, dadurch gekennzeichnet, daß die Vorschubachse (7) in einm Winkel (α) zur Rotationsachse (X) geneigt ist.

2. Vorrichtung nach Anspruch 1, dadurch gekennzeichnet, daß die Rotationsachse (X) die Achse einer Drehung des Werkstückes (1) relativ zum Werkzeug (3) oder zu den Werkzeugen ist (Fig.1).

3. Vorrichtung nach Anspruch 1, dadurch gekennzeichnet, daß die Rotationsachse (X′) die Achse eines einen Rotationskörper bildenden Werkzeuges (12) ist (Fig.2).

4. Vorrichtung nach Anspruch 1, dadurch gekennzeichnet, daß das Werkstück oder das Werkzeug auf einem Kreuzschlitten oder dergleichen gelagert ist, der in Koordinaten (14,15) der Vorschubachse (7) wählbar antreibbar und steuerbar ist.

5. Vorrichtung nach Anspruch 1, dadurch gekennzeichnet, daß sich die Rotationsachse (X) und die Vorschubachse (7) in der Wirkungsebene (8) des Werkzeuges schneiden (Schnittpunkt 9).

FIG.1

FIG.2

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | DE-A-3 006 645  (FLEKAC)<br>* Anspruch 10; Figur 3 * | 1,3 | B 23 Q  27/00 |
| Y | | 4 | |
| X | FR-A- 810 743  (GAUSSE)<br>* Zusammenfassung 2; Seite 2, Zeilen 73-84 * | 1,3,5 | |
| X | US-A-2 924 135  (PUCCI) | 1,3,5 | |
| Y | DE-B-1 127 680  (TILLMANNS)<br>* Spalte 3, Zeilen 6-14 * | 4 | |
| E | DE-A-3 445 004  (RHEINISCHE MASCHINENFABRIK & EISENGIESSEREI ANTON RÖPER GmbH & Co KG) | 1-5 | RECHERCHIERTE SACHGEBIETE (Int. Cl.4)<br><br>B 23 Q  27/00 |

Der vorliegende Recherchenbericht wurde für alle Patentansprüche erstellt.

| Recherchenort | Abschlußdatum der Recherche | Prüfer |
|---|---|---|
| DEN HAAG | 22-01-1987 | DE GUSSEM J.L. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82